# EUROPEAN PATENT APPLICATION

(11) **EP 4 404 314 A1**
(43) Date of publication of application: **24.07.2024**
(21) Application number: 23152439.8
(22) Date of filing: 19.01.2023
(51) Int. Cl.: H01M 6/52, H01M 10/54

(54) **PROCESS FOR RECOVERING MATERIALS FROM A CELL**

(71) Applicant: Northvolt Revolt AB, 112 47 Stockholm (SE)
(72) Inventor: Alemrajabi, Mahmood, 170 67 Solna (SE); Karli, Berfu, 162 66 Vällingby (SE); Vieceli, Nathalia, 112 47 Stockholm (SE)
(74) Representative: Blidefalk, Jenny

(57) **Abstract**

This disclosure relates to processes for recovering materials from a cell, such as a rechargeable or secondary cell. The processes comprise processing a cell to provide a processed cell and a waste liquid, the waste liquid comprising an organic liquid; changing the temperature of the waste liquid to provide a composition comprising a solid fraction and a liquid fraction; and separating the solid fraction and the liquid fraction from one another to provide a first recovered organic fraction and a remaining fraction.

## Description

### Field

The present disclosure relates to a process for recovering materials from a cell.

### Background

Rechargeable cells or batteries, also referred to as secondary cells or batteries, find widespread use as electrical power supplies and energy storage systems. In particular, in the transportation sector, electric vehicles (EVs) powered by renewable energy have been targeted as the primary means to achieve decarbonisation. This is necessary in order to meet the goals of the Intergovernmental Panel on Climate Change (IPCC) which aim to limit global warming to 1.5°C. As a result of the push from policymakers and global awareness, the number of electric vehicles bought and used worldwide will significantly increase in the next years. As a consequence of the increase in electric vehicle battery uptake and the typical 10-year lifespan of automotive rechargeable cells, the number of cells at the end of life will also rise significantly in the coming decades.

The electrolyte components used in cells are valuable materials. It is inefficient to dispose of these materials without any attempts at recovery and, as the world moves towards a greener and more circular economy, it is essential that recycling of batteries is both attempted and made as efficient as possible.

### Summary

According to a first aspect of the present disclosure there is provided a process for recovering materials from a cell, said process comprising:
providing a cell comprising an enclosure and an organic liquid housed in the enclosure;
processing the cell to provide a processed cell and a waste liquid, the waste liquid comprising at least part of the organic liquid;
changing the temperature of the waste liquid to provide a composition comprising a solid fraction and a liquid fraction; and
separating the solid fraction and the liquid fraction from one another to provide a first recovered organic fraction and a remaining fraction.

In one or more embodiments, processing the cell may comprise at least partially submerging the cell in a processing fluid.

In one or more embodiments, processing the cell by submersion in the processing fluid may provide an intermediate solution; and, subsequent to processing the cell, the process may further comprise treating the intermediate solution to provide the waste liquid and a recovered processing fluid.

In one or more embodiments, the concentration of organic content in the waste liquid may be less than 10 wt% of the total waste liquid.

In one or more embodiments, a fraction separated from the waste liquid may be recycled to form part of the intermediate solution and/or part of the recovered processing fluid.

In one or more embodiments, the treatment process may comprise removing solids from the intermediate solution.

In one or more embodiments, recovered processing fluid may be recycled to form part of the processing fluid.

In one or more embodiments, processing the cell may comprise comminuting the cell to provide the processed cell, in the form of solid material, and the waste liquid.

In one or more embodiments, the concentration of organic content in the waste liquid may be greater than 90 wt% of the total waste liquid.

In one or more embodiments, the solid material is sorted based on size and/or composition.

In one or more embodiments, changing the temperature of the waste liquid may comprise, firstly, substantially solidifying the waste liquid; and subsequently, raising the temperature of the solidified waste liquid to a predetermined temperature at which a liquid fraction forms, the liquid fraction comprising the first recovered organic fraction. Further, separating the solid fraction and the liquid fraction from one another may comprise extracting the liquid fraction from the solid fraction such that the solid fraction comprises the remaining fraction.

In one or more embodiments, the steps of raising the temperature of the solidified waste liquid and extracting the resulting liquid fraction from the solid fraction may be repeated one or more times, each further liquid fraction comprising a further recovered organic fraction and/or a recovered salt and/or a recovered aqueous liquid and/or a recovered additive.

In one or more embodiments, changing the temperature of the waste liquid may comprise lowering the temperature of the waste liquid to a predetermined temperature at which a solid fraction forms while a liquid fraction is maintained, the liquid fraction comprising the first recovered organic fraction. Further, separating the solid fraction and the liquid fraction from one another may comprise extracting the liquid fraction from the solid fraction such that the solid fraction comprises the remaining fraction.

In one or more embodiments, the process may further comprise, subsequent to extracting the liquid fraction from the solid fraction:
raising the temperature of the solidified waste liquid to a predetermined temperature at which a further liquid fraction forms, the further liquid fraction comprising a further recovered organic fraction and/or a recovered salt and/or a recovered aqueous liquid and/or a recovered additive; and
extracting the further liquid fraction from the solid fraction such that the solid fraction comprises the remaining fraction.

In one or more embodiments, the steps of raising the temperature of the solidified waste liquid and extracting the resulting further liquid fraction from the solid fraction may be repeated one or more times, each further liquid fraction comprising a further recovered organic fraction and/or a recovered salt and/or a recovered additive.

In one or more embodiments, a melt crystallisation apparatus may be used to change the temperature of the waste liquid and separate the solid fraction and the liquid fraction from one another, optionally wherein the melt crystallisation apparatus comprises a static-plate crystalliser.

In one or more embodiments, changing the temperature of the waste liquid may comprise lowering the temperature of the waste liquid to a predetermined temperature at which a solid fraction forms, the solid fraction comprising the first recovered organic fraction.

In one or more embodiments, separating the solid fraction and the liquid fraction from one another may comprise extracting the solid fraction from the liquid fraction such that the solid fraction comprises the remaining fraction.

In one or more embodiments, the steps of lowering the temperature of the waste liquid and extracting the resulting solid fraction from the liquid fraction may be repeated one or more times, each solid fraction comprising a respective recovered organic fraction and/or a recovered salt and/or a recovered aqueous liquid and/or a recovered additive.

In one or more embodiments, the first recovered organic fraction may comprise at least one of ethylene carbonate (EC), propylene carbonate (PC), ethyl methyl carbonate (EMC), dimethyl carbonate (DMC), fluoroethylene carbonate (FEC), difluoroethylene carbonate (DEFC), methyl (2,2,2-trifluroethyl) carbonate (FEMC), diethyl carbonate (DEC), or an ionic liquid.

While the disclosure is amenable to various modifications and alternative forms, specifics thereof have been shown by way of example and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description.

### Brief Description of the Drawings

One or more embodiments will now be described by way of example only with reference to the accompanying drawings in which:
Figure 1 shows an example embodiment of a method according to the present disclosure;
Figure 2 shows a melt crystallisation apparatus suitable for use in the method of Figure 1;
Figure 3 shows a further example embodiment of a method according to the present disclosure, in which a plurality of materials is recovered;
Figure 4 shows a further example embodiment of a method according to the present disclosure in which a cell is processed by submersion in a processing fluid;
Figure 5 shows a solution discharge apparatus suitable for use in the method of Figure 4; and
Figure 6 shows a further example embodiment of a method according to the present disclosure in which a cell is processed by comminution.

### Detailed Description

It will be appreciated that, herein, the term cell is used to refer to any suitable electrochemical storage device which makes use of electrodes comprising electrode active materials, which may be suitable for recycling. This may include cells, batteries, or any other suitable electrochemical cell.

An electrochemical storage device such as a secondary cell is typically made up of several distinct components, including: conductive foils (typically copper or aluminium) coated with electrode materials; conductive terminals; a cell casing typically made of aluminium or steel; electrolyte and polymeric materials acting as protective layers between electrodes. It is desirable to separate and recycle these components to minimise environmental impact and maximise the recovery of valuable materials.

In order to recycle the valuable materials held in waste electrolyte, such as organic solvents, salts and additives, it is necessary to separate the waste electrolyte into its component parts. A known method of separation involves raising the temperature of the electrolyte to the various boiling points of the component materials in order to separate said materials as vapours. However, heating the waste electrolyte to these temperatures is very energy intensive and is therefore expensive. Further, unless entirely green/renewable sources of energy are used for the heating process, the process is also associated with substantial greenhouse gas emissions.

The present disclosure provides a method for recovering component materials of waste electrolyte from a cell that does not require the intensive energy usage associated with heating waste electrolyte to reach the boiling points of the various component materials.

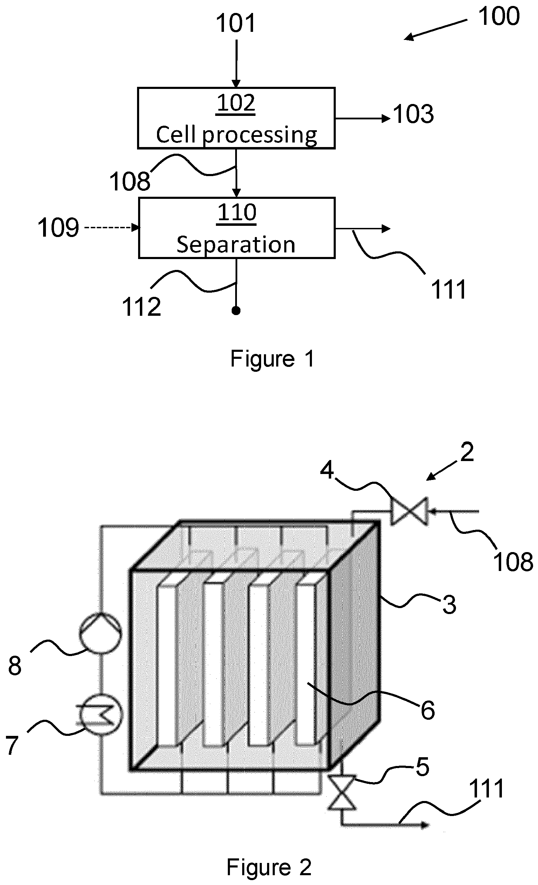

Figure 1 shows an example process 100 according to the present disclosure. The process 100 comprises providing a cell 101 comprising an enclosure and an organic liquid housed in the enclosure. The cell 101 is processed 102 to provide a processed cell 103 and a waste liquid 108. The waste liquid 108 may comprise at least part of the organic liquid, water and one or more salts.

By "organic liquid" is meant an organic component that is liquid phase at room temperature and pressure contained within the cell. The organic liquid is primarily the organic components of the cell electrolyte.

The organic liquid may comprise carbonate solvents such as ethylene carbonate (EC), propylene carbonate (PC), ethyl methyl carbonate (EMC), dimethyl carbonate (DMC), fluoroethylene carbonate (FEC), difluoroethylene carbonate (DEFC), methyl (2,2,2-trifluroethyl) carbonate (FEMC), and/or diethyl carbonate (DEC).

The organic liquid may comprise ionic liquids.

By "ionic liquid" is meant a salt in liquid state at room temperature and pressure. Typically, these are formed from bulky cationic organic ions (such as salts derived from alkylated 1-methylimidazole, or salts derived from alkylate pyridine) in combination with an organic (such as bis-trifluoromethanesulphonimide, trifluoromethanesulphonate, dicyanamide, ethyl sulphonate, or methyl carbonate) or inorganic (such as tetrafluoroborate or heafluorophosphate) counterion.

The organic liquid may comprise non-carbonate solvents such as dioxolone, gamma-butyrolactone, ethyl acetate, m-xylene, dimethyl sulphoxide (DMSO), and 1,2-dimethoxyethane.

Typically, the organic liquid comprises carbonate solvents, non-carbonate solvents, and/or ionic liquids.

Preferably, the organic liquid comprises carbonate solvents.

The waste liquid 108 then undergoes separation 110. This involves applying a temperature change 109 to the waste liquid 108 to provide a composition of a solid fraction and a liquid fraction that are separated from one another to provide a first organic fraction 111 and a remaining fraction 112.

Accordingly, the process 100 provides recovery of at least a first organic fraction from a cell.

In practice, a plurality of cells 101 may be processed to provide a waste liquid 108 that includes contents from the plurality of cells 101.

In the context of this disclosure, the term "fraction" is to be understood as a fraction, part or portion of the 'whole'. For example, an organic fraction may be considered as a fraction of the waste liquid 108 obtained from the processing step 102, that fraction primarily comprising one or more organic solvents and/or one or more ionic liquids.

Further, a solid fraction may be considered as a fraction of the waste liquid comprising components having melting points within a particular range. That range may be a small range (e.g., 0 to 5 °C), a large range (e.g., 0 to 100 °C) or a range defined only by a minimum or maximum value (e.g., greater than 0 °C). More particularly, at the point of the process the solid fraction is referred to, it will be understood that the temperature of said solid fraction will cause the components of the solid fraction to be solid. Similarly, a liquid fraction may be considered very similarly to solid fractions except that, at the point of the process the liquid fraction is referred to, the temperature of said liquid fraction will cause the components of the liquid fraction to be liquid.

The "remaining fraction" may be considered as a fraction of the waste liquid primarily comprising one or more components that are left behind once one or more fractions have been separated from the waste liquid and no further fractions are intended to be separated from what is left behind.

The term "salt" will be understood to generally refer to inorganic salts within the context of this disclosure. Salts are thereby differentiated from ionic liquids which may form part of one of more organic fractions referred to in this disclosure.

The separation stage 110 may be carried out using any suitable apparatus for changing the temperature of the waste liquid 108 as necessary to provide a solid fraction and a liquid fraction and allow for removal of one fraction from the other.

Figure 2 shows the apparatus used in this example, specifically a melt-crystallisation apparatus 2 (which may be referred to hereon as 'the apparatus'), more specifically a static-plate crystalliser. The apparatus 2 comprises a chamber 3 comprising an inlet 4, for receiving waste liquid 108, and an outlet 6, for selectively releasing liquids from the chamber 3.

The apparatus 2 further comprises a plurality of heat transfer plates 6, a heat exchanger 7 and a pump 8. The heat exchanger 7 may be used to control the temperature of a heat transfer fluid which is then pumped into the heat transfer plates 6, which are located in the chamber 3, to affect cooling or heating of waste liquid 108 present in the chamber 3.

In this example, following the addition of waste liquid 108 into the chamber 3 while the outlet 5 is closed, the temperature of the waste liquid 108 is reduced to substantially solidify the waste liquid 108. It will be appreciated that, although the intention may be to entirely solidify the waste liquid 108, there may be traces of liquid trapped within the crystal structures that grow out from the heat transfer plates. Thus, the waste liquid is to be 'substantially' solidified, that is solidified except for possible trace liquids. For example, the trace liquids may comprise electrolyte materials or even impurities having particularly low freezing points but forming a negligible percentage of the overall waste liquid 108 that enters the chamber 3.

Subsequently to the solidification, the temperature of the solidified waste liquid is gradually raised to the melting point of the first organic solvent 111 so that a liquid portion forms which contains the first organic solvent. The outlet 5 may then be opened to allow the first organic solvent 111 in the liquid portion to be extracted from the solid portion, which comprises the remaining portion 112 shown in Figure 1.

In other examples, following the addition of waste liquid 108 into the chamber 3 while the outlet 5 is closed, the temperature of the waste liquid 108 may be reduced to a predetermined temperature at which a solid fraction forms while a liquid fraction is maintained, the liquid fraction comprising the first recovered organic fraction 111. Once, the contents of the chamber 3 has reached the predetermined temperature and the desired solid and liquid fractions have been formed, the outlet 5 may then be opened to allow the first organic solvent 111 in the liquid portion to be extracted from the solid portion.

In further examples, a melt crystallisation apparatus, such as the apparatus 2, may not be used. Instead, an apparatus may be used that is suitable for gradually lowering, and/or directly lowering, the temperature of the waste liquid 108 in the chamber 3 to a predetermined temperature at which a solid fraction forms that contains the first organic fraction. This solid fraction may then be removed from the liquid fraction forming the rest of the waste liquid 108. The solid fraction may be extracted from the liquid fraction by any suitable means, depending on the apparatus used and the properties of the solid fraction. For example, the solid fraction may float to the surface of the liquid fraction (similarly to ice cubes in a glass of water) and may therefore be removed by skimming or otherwise collecting the solid portion from the surface. The solid fraction may alternatively settle at a bottom portion of the respective apparatus and may be dredged from the bottom. In other examples, it may be the case that the waste liquid is placed in a chamber and a removable heat transfer device is submerged into the waste liquid to cool the contents of the chamber. In such examples, the solid fraction may crystallise against walls of the heat transfer device and propagate therefrom. Accordingly, removal of the heat transfer device from the chamber may also provide removal of the solid fraction from the liquid fraction.

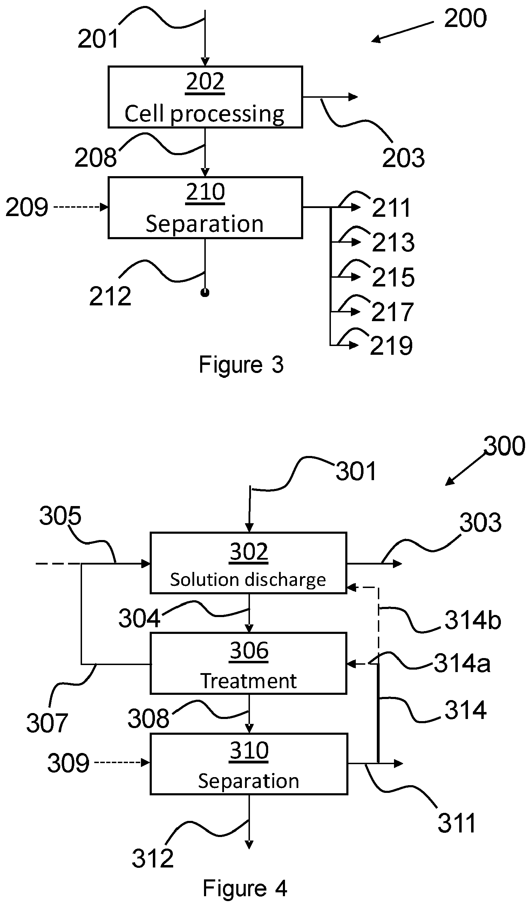

Figure 3 shows an example process 200 according to the present disclosure. The process 200 is similar to the process 100 shown in Figure 1 except that a plurality of fractions 211, 213, 215, 217, 219 are recovered from the waste liquid 208.

In particular, the steps of raising the temperature of the solidified waste liquid and extracting the resulting liquid fraction from the solid fraction are repeated to provide a second, third and fourth liquid fractions. Each liquid fraction comprises a respective organic fraction (which may comprise at least one organic solvent and/or ionic liquid) and/or an aqueous liquid and/or a (recovered) salt and/or a (recovered) additive.

To further demonstrate this example, it may be considered that the waste liquid 108 comprises:
- ethylene carbonate (EC), having a melting point of 36.4 °C;
- additives, having melting points from 18 to 23 °C for example;
- dimethyl carbonate (DMC), having a melting point from 2 to 4 °C;
- water, having a melting point of 0 °C;
- ethyl methyl carbonate (EMC), having a melting point of -14 °C; and
- diethyl carbonate (DEC), having a melting point of -43 °C.

Using the apparatus 2 (shown in Figure 2), the temperature of the waste liquid may first be dropped to -20 °C. This will result in substantially all components of the waste liquid except DEC solidifying against the heat transfer plates 6. The resulting liquid fraction, comprising a first organic fraction 211 consisting substantially of DEC, may then be released from the chamber 3 via the outlet 5. Once the first organic fraction 211 is removed, the heat transfer plates 6 may be used to raise the temperature of the solid fraction to -10 °C so that a further liquid fraction forms, this one comprising a second organic fraction 213 consisting substantially of EMC. Again, this liquid fraction may be removed via the outlet 5.

Next, the temperature may be raised again to 1 °C, resulting in a further liquid fraction forming, this fraction comprising an aqueous fraction 215 consisting substantially of water. The aqueous fraction may be removed via the outlet 5.

These steps may also be repeated at incrementally increasing temperatures to extract a third organic fraction 217, consisting substantially of DMC, and an additive fraction 219, consisting substantially of the additives which might include fluoroethylene carbonate (FEC) and vinylene carbonate (VC) for example.

The remaining fraction 212 would then consist primarily of EC. Accordingly, the various components forming part of the waste liquid have been recovered by way of the process 200.

When it is mentioned above that certain fractions 'consist primarily' of a certain component, it will be appreciated that 100% yields may not be feasible. Accordingly, a fraction with yield of the intended component in concentrations of 70% and above is considered to consist primarily of that component, for example. Preferably, certain fractions may have a concentration of 80% or more of the intended component; more preferably a concentration of 90% or more of the intended component.

It will also be appreciated that the examples described above, particularly the references to the temperatures used, are simplified for the sake of demonstrating how the process 200 would work. In practicality, the various components of the waste liquid 208 and the ways in which those components interact may impact the solid-liquid equilibriums involved and the respective crystallization temperature/melting points of different components. For example, in practice, the aqueous fraction 215 may also comprise electrolyte salts (such as LiPF₆) which may slightly alter the melting point of the aqueous fraction from the melting point of water. The waste liquid may also comprise different components to the specific examples mentioned above. For example, in some embodiments, the waste liquid may comprise one or more ionic liquids.

However, confirming suitable temperatures to be used for a particular waste liquid composition in order to obtain desired fractions is well within the capabilities of those skilled in the art through understanding relevant solid-liquid equilibriums.

It will further be appreciated that the waste liquid 208 may comprise one or more impurities. LiPF₆ is one example of a possible impurity. Other examples include aluminium hydroxide, lithium hydroxide and sodium carbonate. One or more impurities may be captured alongside a 'bulk' component when separating a particular fraction. Alternatively, one or more impurities may be separated from the waste liquid 208 as an impurity fraction, for example.

The process 200 is described above on the basis of a plurality of liquid fractions being separated from a gradually diminishing solid fraction. However, it will be appreciated that, just as alternative examples of the process 100 shown in Figure 1 could involve a solid fraction being removed from a liquid fraction, alternative examples of the process 200 shown in Figure 3 may involve a plurality of solid fractions being removed from a gradually diminishing liquid fraction.

Further, in some examples, additional separation steps may be applied to one or more fractions obtained from the separation process 210. For example, an additional process may be carried out on an obtained fraction in order to purify the primary and/or desired component within that fraction. This may be particularly beneficial if it is known that a particular impurity is likely to have been captured within an obtained fraction containing a desired component.

There may also be cases where two components have similar melting/freezing points to the extent that the separation process 210 may be feasible only for obtaining a fraction containing a mixture of those two components. In such cases a further separation process, which does not rely on the melting/freezing points, may be applied on the relevant fraction following initial separation.

It is also possible that the phase changes of certain substances are significantly altered by the composition of the liquid they are held within. Accordingly, in some cases obtaining and removing a first fraction from the waste liquid may allow for further fractions to be extracted at preferred temperatures (requiring less energy usage to achieve) that would not be effective if the contents of that first fraction were still present.

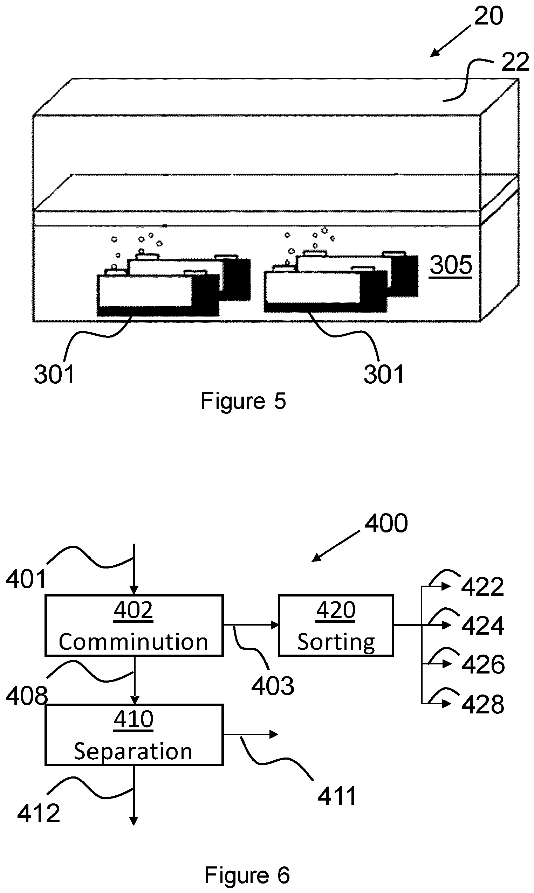

Figure 4 shows an example process 300 according to the present disclosure. In the process 300, processing the cell comprises at least partially submerging the cell 301 in a processing fluid 305, as shown in Figure 5.

This cell processing technique may be referred to as solution discharge 302. The processing fluid penetrates the enclosure of the cell 301 and replaces the electrolyte materials inside the enclosure so that the valuable components leach into the processing fluid 305 outside of the enclosure. This process may be accelerated by first opening a vent in the cell enclosure prior to submersion in the processing fluid 305.

Preferably, the processing fluid 305 is an alkaline processing fluid as this prevents dissolution of the components also housed within the enclosure of the cell.

Figure 5 more particularly shows an example of a solution discharge device 20 (which may be referred to hereon as 'the device'). The device 20 comprises a tank 22 in which the cell 301 (or plurality of cells 301 in this case) is placed and the processing fluid 305 is added.

Referring back to Figure 4, the solution discharge process 302 results in the formation of an intermediate solution 304 - the processing fluid with electrolyte component materials such as organic solvents, salts and/or additives dissolved in water forming part of the processing fluid.

The intermediate solution 304 undergoes a treatment process 306 that provides the waste liquid 308 and a recovered processing fluid 307. In this example, the waste liquid 308 is an aqueous solution comprising organic solvents, salts and/or additives dissolved therein. The waste liquid may have a concentration of organic content less than 10 wt% of the total waste liquid.

The treatment process 306 may be configured to provide a waste liquid 308 with a known composition that is selected to allow the following separation process 310 to be carried out under preferred conditions. For example, the treatment process 306 may be configured to provide an aqueous solution with a predetermined weight concentration of water on the basis of a certain organic fraction composition being obtainable at a particular temperature when the concentration of water in the waste liquid 308 is controlled in this manner.

The treatment process 306 may additionally involve removal of solids (not shown) that escaped the cell 301 during solution discharge 302.

The recovered processing fluid 307 may be recycled to form at least part of the processing fluid 305 used in further solution discharge processes 302, thereby improving the efficiency of the process 300.

The waste liquid 308 subsequently undergoes separation as has been described with respect to the processes 100, 200 shown in Figure 1 and 3.

However, in this process 300, a fraction separated from the waste liquid 308 is recycled and is hence a recycled fraction 314. In one example, the recycled fraction 314a is recycled to form part of the intermediate solution 304 that is treated 306 to form the waste liquid. In another example, the recycled fraction 314b is recycled to form part of the processing fluid 305 used to solution discharge 302 the cell 301.

Whether the recycled fraction is recycled to form part of the processing fluid 305 or the intermediate solution, the re-use of the recycled fraction further improves the efficiency of the process 300.

The recycled fraction 314 may be an aqueous fraction comprising water and, optionally, one or more salts present in the processing fluid 305. The recycled fraction may also be the remaining fraction or may be a fraction that is actively separated from the remainder of the waste liquid 308.

Figure 6 shows an example process 400 according to the present disclosure. In the process 400, the cell 401, from which organic solvents are to be recovered, is comminuted 402 (or crushed) to provide a processed cell, in the form of solid material 403, and a waste liquid 408.

The comminution step 402 may also comprise drying of the processed cell to separate the waste liquid 408 from the solid material 403. Drying may be carried out by an evaporation method, such as vacuum evaporation, or by pyrolysis at elevated temperature, in particular between 130°C and 500°C, to break down organic molecules.

From the viewpoint of energy consumption and process simplification, vacuum evaporation is particularly preferred, and in particular at a temperature of 200°C or less, preferably 150°C or less, but preferably 60°C or more, and at an absolute pressure of 300 mbar or less, preferably 100 mbar or less, more preferably 50 mbar or less, but preferably 30 mbar or more.

The equipment for carrying out evaporation or pyrolysis is not particularly limited, and any device known in the art may be used as desired. For example, horizontal or vertical paddle dryers may preferably be applied for vacuum evaporation.

Similarly to the processes 100, 200, 300 shown in Figures 1, 3 and 4, the waste liquid 408 may comprise organic solvents, ionic liquids, water and/or one or more salts. However, unlike the process 300 shown in Figure 300, the waste liquid 408 would not be an aqueous solution. Rather, the waste liquid may have a concentration of water of about 5 wt%, for example. Furthermore, the waste liquid may have a concentration of organic content greater than 90 wt% of the total waste liquid.

Nevertheless, the separation process 410 may be carried out similarly to any of the separation processes 110, 210, 310 discussed above in order to obtain solid and liquid fractions comprising, at least, a first recovered organic fraction and a remaining fraction.

Separately to the waste liquid 408 being separated, the solid material 403 is sorted 420 based on size and/or composition of the solid material particles. For example, the solid material 403 may be sorted into copper particles 422, aluminium particles 424, plastic particles 426 and black mass 428. Each of these materials may then be recycled for use in future cells or other products requiring such materials.

It will be appreciated that various further steps may be required to recycle these materials, particularly black mass 428. (Black mass is a battery e-waste product that is recovered from recycled batteries and is a collection of materials which may include electrode active materials as a majority component.) Suitable further processing steps are known to those skilled in the art. However, such steps are not the focus of this disclosure and, hence, will not be explained further here.

Figures 4 and 6 represent two examples of methods for processing a cell to provide a processed cell and a waste liquid. (Specifically, Figure 4 refers to a solution discharge process and Figure 6 refers to a crushing and sorting process.) However, "processing a cell to provide a processed cell and a waste liquid" may refer to a variety of other processes and operations for recovering materials from cells that known within the art.

The waste liquid may refer to a liquid electrolyte extracted directly from a cell. The waste liquid may alternatively be a liquid within which materials from a cell are dissolved, suspended or otherwise dispersed. Such a liquid may be obtained from a process such as, or similar to, the solution discharge process described with respect to Figure 4 or from washing internal components of production lines for producing new cells, for example.

Although specific terms may be employed herein, they are used in a generic and descriptive sense only and not for purposes of limitation. Therefore, persons skilled in the art would recognize numerous variations to the described embodiments that would still fall within the scope of the appended claims. As used herein, the terms "comprise/comprises" or "include/includes" do not exclude the presence of other elements or steps. Furthermore, although individual features may be included in different claims (or embodiments), these may possibly advantageously be combined, and the inclusion of different claims (or embodiments) does not imply that a certain combination of features is not feasible and/or advantageous. In addition, singular references do not exclude a plurality. Finally, reference numerals in the claims are provided merely as a clarifying example and should not be construed as limiting the scope of the claims in any way.

## Claims

1. A process for recovering materials from a cell, said process comprising:
providing a cell comprising an enclosure and an organic liquid housed in the enclosure;
processing the cell to provide a processed cell and a waste liquid, the waste liquid comprising at least part of the organic liquid;
changing the temperature of the waste liquid to provide a composition comprising a solid fraction and a liquid fraction; and
separating the solid fraction and the liquid fraction from one another to provide a first recovered organic fraction and a remaining fraction.

2. The process of claim 1, wherein processing the cell comprises at least partially submerging the cell in a processing fluid.

3. The process of claim 2, wherein:
processing the cell by submersion in the processing fluid provides an intermediate solution; and,
subsequent to processing the cell, the process further comprises treating the intermediate solution to provide the waste liquid and a recovered processing fluid.

4. The process of claim 3, wherein the concentration of organic content in the waste liquid is less than 10 wt% of the total waste liquid.

5. The process of claim 3 or claim 4, wherein a fraction separated from the waste liquid is recycled to form part of the intermediate solution and/or part of the recovered processing fluid.

6. The process of any of claims 3 to 5, wherein the treatment process comprises removing solids from the intermediate solution.

7. The process of any of claims 3 to 6, wherein recovered processing fluid is recycled to form part of the processing fluid.

8. The process of claim 1, wherein processing the cell comprises comminuting the cell to provide the processed cell, in the form of solid material, and the waste liquid.

9. The process of claim 8, wherein the concentration of organic content in the waste liquid is greater than 90 wt% of the total waste liquid.

10. The process of claim 8 or claim 9, wherein the solid material is sorted based on size and/or composition.

11. The process of any preceding claim, wherein:
changing the temperature of the waste liquid comprises, firstly, substantially solidifying the waste liquid; and subsequently, raising the temperature of the solidified waste liquid to a predetermined temperature at which a liquid fraction forms, the liquid fraction comprising the first recovered organic fraction; and
separating the solid fraction and the liquid fraction from one another comprises extracting the liquid fraction from the solid fraction such that the solid fraction comprises the remaining fraction.

12. The process of claim 11, wherein the steps of raising the temperature of the solidified waste liquid and extracting the resulting liquid fraction from the solid fraction are repeated one or more times, each further liquid fraction comprising a further recovered organic fraction and/or a recovered salt and/or a recovered aqueous liquid and/or a recovered additive.

13. The process of any of claims 1 to 10, wherein:
changing the temperature of the waste liquid comprises lowering the temperature of the waste liquid to a predetermined temperature at which a solid fraction forms while a liquid fraction is maintained, the liquid fraction comprising the first recovered organic fraction; and
separating the solid fraction and the liquid fraction from one another comprises extracting the liquid fraction from the solid fraction such that the solid fraction comprises the remaining fraction.

14. The process of claim 13, further comprising, subsequent to extracting the liquid fraction from the solid fraction:
raising the temperature of the solidified waste liquid to a predetermined temperature at which a further liquid fraction forms, the further liquid fraction comprising a further recovered organic fraction and/or a recovered salt and/or a recovered aqueous liquid and/or a recovered additive; and
extracting the further liquid fraction from the solid fraction such that the solid fraction comprises the remaining fraction.

15. The process of claim 14, wherein the steps of raising the temperature of the solidified waste liquid and extracting the resulting further liquid fraction from the solid fraction are repeated one or more times, each further liquid fraction comprising a further recovered organic fraction and/or a recovered salt and/or a recovered additive.

16. The process of any of claims 11 to 15, wherein a melt crystallisation apparatus is used to change the temperature of the waste liquid and separate the solid fraction and the liquid fraction from one another, optionally wherein the melt crystallisation apparatus comprises a static-plate crystalliser.

17. The process of any of claims 1 to 10, wherein changing the temperature of the waste liquid comprises:
lowering the temperature of the waste liquid to a predetermined temperature at which a solid fraction forms, the solid fraction comprising the first recovered organic fraction.

18. The process of claim 17, wherein separating the solid fraction and the liquid fraction from one another comprises extracting the solid fraction from the liquid fraction such that the solid fraction comprises the remaining fraction.

19. The process of claim 18, wherein the steps of lowering the temperature of the waste liquid and extracting the resulting solid fraction from the liquid fraction are repeated one or more times, each solid fraction comprising a respective recovered organic fraction and/or a recovered salt and/or a recovered aqueous liquid and/or a recovered additive.

20. The process of any preceding claim, wherein the first recovered organic fraction comprises at least one of ethylene carbonate (EC), propylene carbonate (PC), ethyl methyl carbonate (EMC), dimethyl carbonate (DMC), fluoroethylene carbonate (FEC), difluoroethylene carbonate (DEFC), methyl (2,2,2-trifluroethyl) carbonate (FEMC), diethyl carbonate (DEC), or an ionic liquid.
